# EUROPEAN PATENT SPECIFICATION

(11) **EP 2 562 406 B1**
(45) Date of publication and mention of the grant of the patent: **02.12.2015**
(21) Application number: 10850230.3
(22) Date of filing: 22.04.2010
(51) Int. Cl.: F02M 25/07, F02D 41/00

(54) **ABNORMALITY DETECTION DEVICE AND ABNORMALITY DETECTION METHOD FOR EGR SYSTEM**
VORRICHTUNG UND VERFAHREN ZUR ERKENNUNG VON ABNORMALITÄTEN FÜR EIN AGR-SYSTEM
DISPOSITIF DE DÉTECTION D'ANOMALIES ET PROCÉDÉ DE DÉTECTION D'ANOMALIES POUR SYSTÈME EGR

(43) Date of publication of application: 27.02.2013
(73) Proprietor: TOYOTA JIDOSHA KABUSHIKI KAISHA, Toyota-shi, Aichi-ken, 471-8571 (JP)
(72) Inventor: TAIRA, Shinya, Toyota-shi, Aichi-ken, 471-8571 (JP); NAKAMURA, Yoshitaka, Toyota-shi, Aichi-ken, 471-8571 (JP); KIDOKORO, Toru, Toyota-shi, Aichi-ken, 471-8571 (JP); SAWADA, Hiroshi, Toyota-shi, Aichi-ken, 471-8571 (JP)
(74) Representative: Winter, Brandl, Fürniss, Hübner, Röss, Kaiser, Polte - Partnerschaft mbB
(86) International application number: PCT/JP2010/057150
(87) International publication number: WO 2011/132289

(56) References cited:
- EP-A2- 1 870 584
- WO-A2-2007/076038
- JP-A- 2007 127 037
- JP-A- 2008 223 554
- JP-A- 2008 223 554
- JP-A- 2009 002 184
- JP-A- 2009 074 459
- US-A1- 2007 119 172
- US-A1- 2007 246 028

## Description

### [TECHNICAL FIELD]

The present invention relates to an abnormal situation detecting apparatus and an abnormal situation detecting method for an EGR system.

### [BACKGROUND ART]

In recent years, a system, which is provided with a high pressure EGR apparatus and a low pressure EGR apparatus, has been developed as an EGR system of an internal combustion engine. The high pressure EGR apparatus is provided with a high pressure EGR passage for connecting the exhaust passage upstream of a turbine and the intake passage downstream of a compressor. The high pressure EGR apparatus introduces a part of the exhaust gas as the EGR gas (high pressure EGR gas) into the intake passage via the high pressure EGR passage. The low pressure EGR apparatus is provided with a low pressure EGR passage for connecting the exhaust passage downstream of the turbine and an intake passage upstream of the compressor. The low pressure EGR apparatus introduces a part of the exhaust gas as the low pressure EGR gas into the intake passage via the low pressure EGR passage.

In the EGR system as described above, the flow rate of the high pressure EGR gas (hereinafter referred to as "high pressure EGR gas amount" in some cases), which is introduced into the intake passage via the high pressure EGR passage, is regulated by a high pressure EGR valve provided for the high pressure EGR passage. On the other hand, the flow rate of the low pressure EGR gas (hereinafter referred to as "low pressure EGR gas amount" in some cases), which is introduced into the intake passage via the low pressure EGR passage, is regulated by a low pressure EGR valve provided for the low pressure EGR passage.

In the EGR system as described above, the mode of introduction of the EGR gas is changed in some cases depending on the operation state of the internal combustion engine. For example, during the low load-low rotation operation, only the high pressure EGR gas is introduced into the intake passage by means of the high pressure EGR apparatus. On the other hand, during the high rotation operation or the high load operation, only the low pressure EGR gas is introduced into the intake passage by means of the low pressure EGR apparatus. Further, for example, during the middle load operation other than the above, the low pressure EGR gas and the high pressure EGR gas are introduced into the intake passage by means of both of the low pressure EGR apparatus and the high pressure EGR passage. When both of the low pressure EGR gas and the high pressure EGR gas are introduced into the intake passage, the ratio between the introducing flow rates of the gases (hereinafter referred to as "EGR gas flow rate ratio" in some cases) is controlled by regulating the opening degrees of the high pressure EGR valve and the low pressure EGR valve.

In this context, Patent Document 1 discloses a technique in which the opening degree of a high pressure EGR valve is regulated to an opening degree deviated toward the closing side as compared with a target opening degree determined depending on the operation state to be provided at the destination of change or transition, while considering the response delay of the change of the low pressure EGR gas amount during the transition period of the acceleration of an internal combustion engine. Patent Document 2 also discloses a technique in relation to an EGR system which is provided with a high pressure EGR apparatus and a low pressure EGR apparatus. Patent Document 2 describes that it is feared that the exhaust characteristic of an internal combustion engine may be deteriorated resulting from the difference in the temperature characteristic between the high pressure EGR gas and the low pressure EGR gas when the mode of introduction of the EGR gas is changed during the operation in the transition period of the internal combustion engine.

Document US 2007/0119172 A1 describes an estimator and a diagnostic logic. Based on information from engine sensors, the estimator estimates an EGR mass airflow that is compared to mass airflow sensors results. The comparison result is then input into the diagnostic logic which diagnoses whether one of two mass airflow sensors is degraded or not.

Document US 2007/0246028 A1 describes an EGR apparatus controlled by an ECU. The EGR apparatus has a high-pressure EGR passage equipped with a high-pressure EGR valve and a low-pressure EGR passage equipped with a low-pressure EGR. In a low load region, the ECU feedback-controls the HP-EGR valve only and fully closes the LP-EGR valve, in a medium load region, the ECU feedback-controls the HP-EGR valve and open-controls the LP-EGR valve, and in a high-load region, the ECU fully closes the HP-EGR valve and feedback-controls the LP-EGR valve only. The feedback-control is based on an air/fuel ratio detected by an oxygen sensor that is located at a most downstream position. Said ECU stores a throttle-position/flow-amount reference map that defines a relationship between a throttle position and an EGR flow rate for a plurality of different engine speeds and that includes information on a respective normal flow range. If it is determined that the LP-EGR amount is not in the normal flow range, the ECU determines that the LP-EGR system causes a malfunction and the ECU fully closes the LP-EGR valve and feedback-controls the HP-EGR valve. The throttle-flow information is corrected only if the LP-EGR amount is not out of range.

Document JP 2008 223554 A describes an EGR amount control means that controls a low-pressure EGR means and a high-pressure EGR means. An intake air temperature sensor is placed in an intake manifold. After changing a low-pressure EGR gas quantity and a high-pressure EGR gas quantity, it is determined based on a change in the intake air temperature, whether there is an abnormality in the low-pressure EGR loop and/or in the high-pressure EGR loop.

### [PRIOR ART DOCUMENTS]

### [PATENT DOCUMENTS]

Patent Document 1: Japanese Patent Application Laid-Open No.2008-175131
Patent Document 2: Japanese Patent Application Laid-Open No.2009-002184,
   Document US 2007/0119172 A1,
   Document US 2007/0246028 A1, and
   Document JP 2008 223554 A.

### [SUMMARY OF THE INVENTION]

### [PROBLEMS TO BE SOLVED BY THE INVENTION]

An object of the present invention is to more preferably detect the abnormal situation of an EGR system of an internal combustion engine provided with a high pressure EGR apparatus and a low pressure EGR apparatus.

### [MEANS FOR SOLVING THE PROBLEMS]

In the present invention, the flow rate ratio allowable range, which is such a range that the degree of deterioration of the exhaust characteristic of an internal combustion engine falls in an allowable level, is calculated for the EGR gas flow rate ratio which is the ratio between a high pressure EGR gas amount and a low pressure EGR gas amount. If the estimated value of the EGR gas flow rate ratio is deviated from the flow rate ratio allowable range, it is judged that an EGR system is in an abnormal situation.

In particular, the abnormal situation detecting apparatus for the EGR system according to the present invention resides in an abnormal situation detecting apparatus for an EGR system of an internal combustion engine including a turbo charger having a turbine which is provided for an exhaust passage and a compressor which is provided for an intake passage, the EGR system of the internal combustion engine comprising:
a high pressure EGR apparatus which has a high pressure EGR passage for connecting the exhaust passage upstream of the turbine and the intake passage downstream of the compressor, and a high pressure EGR valve for regulating a flow rate of a high pressure EGR gas introduced into the intake passage via the high pressure EGR passage;
a low pressure EGR apparatus which has a low pressure EGR passage for connecting the exhaust passage downstream of the turbine and the intake passage upstream of the compressor, and a low pressure EGR valve for regulating a flow rate of a low pressure EGR gas introduced into the intake passage via the low pressure EGR passage; and
control means which controls an EGR gas flow rate ratio as a ratio between the flow rate of the high pressure EGR gas introduced into the intake passage and the flow rate of the low pressure EGR gas introduced into the intake passage so that the EGR gas flow rate ratio arrives at a prescribed target ratio, and the abnormal situation detecting apparatus for the EGR system comprising:
   estimating means which estimates the actual EGR gas flow rate ratio;
   allowable range calculating means which calculates a flow rate ratio allowable range as such a range of the EGR gas flow rate ratio that a degree of deterioration of an exhaust characteristic of the internal combustion engine falls in an allowable level by taking the target ratio as a reference; and
   judging means which judges that the EGR system is in an abnormal situation if the EGR gas flow rate ratio estimated by the estimating means is deviated from the flow rate ratio allowable range calculated by the allowable range calculating means.

Even when the total amount of the high pressure EGR gas amount and the low pressure EGR gas amount arrives at the target amount, if the flow rate ratio therebetween is greatly deviated from the target ratio, then the exhaust characteristic of the internal combustion engine is excessively deteriorated. According to the present invention, it is possible to detect the abnormal situation (abnormality or malfunction) of the EGR system accompanied by the excessive deterioration of the exhaust characteristic as described above.

The degree of deterioration of the exhaust characteristic, which is brought about when the EGR gas flow rate ratio is deviated from the target ratio, is changed depending on the operation condition including, for example, the EGR ratio as the ratio of the entire amount of the EGR gas (sum of the high pressure EGR gas amount and the low pressure EGR gas amount) with respect to the intake amount of the internal combustion engine, the boost pressure, and the cooling water temperature or the intake air temperature of the internal combustion engine. In view of the above, in the present invention, the allowable range calculating means may calculate the flow rate ratio allowable range on the basis of at least any one of the EGR ratio, the boost pressure, and the cooling water temperature or the intake air temperature of the internal combustion engine. In this case, the allowable range calculating means may previously have a map which represents a relationship between the EGR ratio, the boost pressure, or the cooling water temperature or the intake air temperature of the internal combustion engine and the flow rate ratio allowable range. Further, the flow rate ratio allowable range may be calculated on the basis of the map.

The allowable range calculating means may calculate a standard flow rate ratio allowable range as a standard value of the flow rate ratio allowable range on the basis of the EGR ratio and the boost pressure, and the allowable range calculating means may calculate a correction coefficient on the basis of the cooling water temperature or the intake air temperature of the internal combustion engine. In this case, the allowable range calculating means calculates the flow rate ratio allowable range by correcting the standard flow rate ratio allowable range with the correction coefficient.

In another aspect, the abnormal situation detecting method for the EGR system according to the present invention resides in an abnormal situation detecting method for an EGR system of an internal combustion engine including a turbo charger having a turbine which is provided for an exhaust passage and a compressor which is provided for an intake passage, the EGR system of the internal combustion engine comprising:
a high pressure EGR apparatus which has a high pressure EGR passage for connecting the exhaust passage upstream of the turbine and the intake passage downstream of the compressor, and a high pressure EGR valve for regulating a flow rate of a high pressure EGR gas introduced into the intake passage via the high pressure EGR passage;
a low pressure EGR apparatus which has a low pressure EGR passage for connecting the exhaust passage downstream of the turbine and the intake passage upstream of the compressor, and a low pressure EGR valve for regulating a flow rate of a low pressure EGR gas introduced into the intake passage via the low pressure EGR passage; and
control means which controls an EGR gas flow rate ratio as a ratio between the flow rate of the high pressure EGR gas introduced into the intake passage and the flow rate of the low pressure EGR gas introduced into the intake passage so that the EGR gas flow rate ratio arrives at a prescribed target ratio, and the abnormal situation detecting method for the EGR system comprising:
   an estimating step of estimating the actual EGR gas flow rate ratio;
   an allowable range calculating step of calculating a flow rate ratio allowable range as such a range of the EGR gas flow rate ratio that a degree of deterioration of an exhaust characteristic of the internal combustion engine falls in an allowable level by taking the target ratio as a reference; and
   a judging step of judging that the EGR system is in an abnormal situation if the EGR gas flow rate ratio estimated in the estimating step is deviated from the flow rate ratio allowable range calculated in the allowable range calculating step.

According to the abnormal situation detecting method for the EGR system concerning the present invention, it is possible to obtain the effect which is the same as or equivalent to the effect obtained by the abnormal situation detecting apparatus for the EGR system concerning the present invention.

### [ADVANTAGEOUS EFFECT OF THE INVENTION]

According to the present invention, it is possible to detect the abnormal situation (abnormality or malfunction) accompanied by the excessive deterioration of the exhaust characteristic in the EGR system of the internal combustion engine provided with the high pressure EGR apparatus and the low pressure EGR apparatus.

### [BRIEF DESCRIPTION OF THE DRAWINGS]

[Fig. 1] This is a view showing the schematic construction of an internal combustion engine and an intake and exhaust system thereof according to an embodiment.
[Fig. 2] This is a view showing the relationship between the operation state of the internal combustion engine and the mode of introduction of the EGR gas.
[Fig. 3] This is a view illustrating the relationships among the EGR ratio, the boost pressure, and the cooling water temperature, the EGR gas flow rate ratio, and the degree of deterioration of the exhaust characteristic.
[Fig. 4] This is s a flow chart showing the abnormal situation judgment flow for an EGR system according to the embodiment.

### [EMBODIMENTS FOR CARRYING OUT THE INVENTION]

A specified embodiment of the present invention will be explained below on the basis of the drawings. For example, as for the sizes or dimensions, the materials, the shapes, and the relative arrangement of the constitutive components or parts described in this embodiment, it is not intended that the technical scope of the invention is limited only thereto, unless otherwise specifically noted. The explanation of the embodiment of the abnormal situation detecting apparatus for the EGR system according to the present invention described below also serves as the explanation of an embodiment of the abnormal situation detecting method for the EGR system according to the present invention.

### <Embodiment>

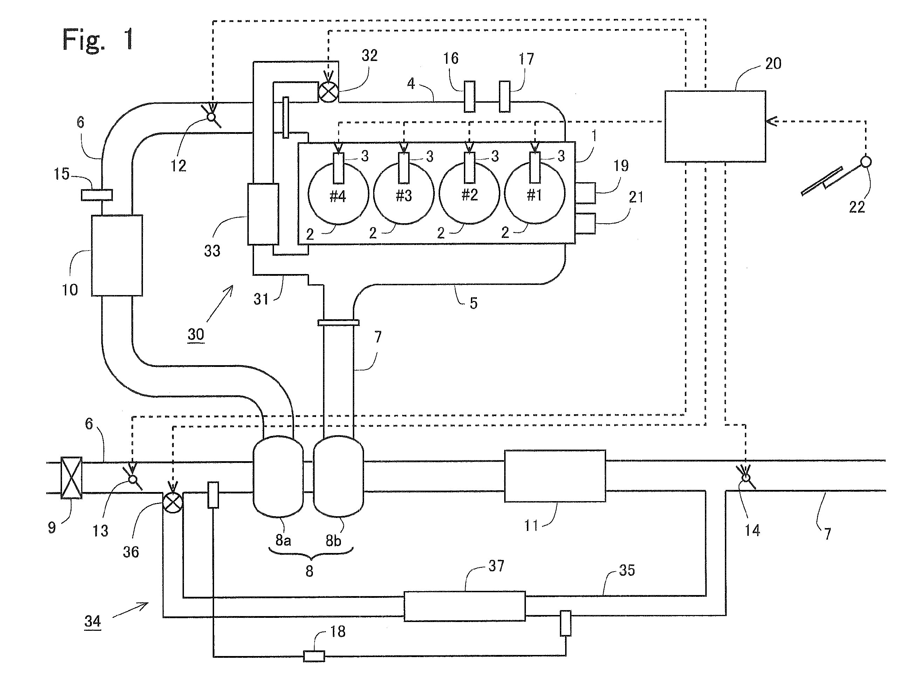

An embodiment of the abnormal situation detecting apparatus for the EGR system according to the present invention will be explained on the basis of Figs. 1 to 4. In this section, an exemplary case, in which the present invention is applied to an EGR system of a diesel engine for driving a vehicle, will be explained by way of example. However, the abnormal situation detecting apparatus for the EGR system according to the present invention is also applicable to any EGR system of any other internal combustion engine including, for example, gasoline engines.

### (Schematic arrangement of internal combustion engine and intake and exhaust system thereof)

Fig. 1 shows a schematic arrangement of an internal combustion engine and an intake and exhaust system thereof according to this embodiment. The internal combustion engine 1 is a diesel engine for driving a vehicle having four cylinders 2. Each of the cylinders 2 is provided with a fuel injection valve 3 for directly injecting the fuel into the cylinder 2.

An intake manifold 4 and an exhaust manifold 5 are connected to the internal combustion engine 1. An intake passage 6 is connected to the intake manifold 4. An exhaust passage 7 is connected to the exhaust manifold 5. A compressor 8a of a turbo charger 8 is installed in the intake passage 6. A turbine 8b of the turbo charger 8 is installed in the exhaust passage 7.

An inter cooler 10 and a first throttle valve 12 are provided on the downstream side from the compressor 8a in the intake passage 6. The inter cooler 10 cools the intake gas by performing the heat exchange between the outside air (external air) and the intake gas. The first throttle valve 12 regulates the flow rate of the intake gas allowed to flow through the intake passage 6 by changing the cross-sectional area of the flow passage of the intake passage 6.

An air flow meter 9 and a second throttle valve 13 are provided on the upstream side from the compressor 8a in the intake passage 6. The air flow meter 9 detects the intake air amount of the internal combustion engine 1. The second throttle valve 13 regulates the flow rate of the intake gas allowed to flow through the intake passage 6 by changing the cross-sectional area of the flow passage of the intake passage 6.

A first intake temperature sensor 15 is provided on the upstream side from the second throttle valve 13 on the downstream side from the inter cooler 10 in the intake passage 6. A second intake temperature sensor 16 and a boost pressure sensor 17 are provided for the intake manifold 4. The first and second intake temperature sensors 15, 16 detect the temperatures of the intake gas allowed to flow through the intake passage 6 or the intake manifold 4. The boost pressure sensor 17 detects the boost pressure (intake pressure).

An exhaust gas purification apparatus 11 is provided on the downstream side from the turbine 8b in the exhaust passage 7. The exhaust gas purification apparatus 11 is composed of a catalyst such as an oxidation catalyst or the like, and a particulate filter for collecting PM (Particulate Matter) contained in the exhaust gas. An exhaust throttle valve 14 is provided on the downstream side from the exhaust gas purification apparatus 11 in the exhaust passage 7. The exhaust throttle valve 14 regulates the flow rate of the exhaust gas allowed to flow through the exhaust passage 7 by changing the cross-sectional area of the flow passage of the exhaust passage 7.

An EGR system, which is provided to introduce a part of the exhaust gas flowing through the exhaust system as the EGR gas into the intake system, is provided for the intake/exhaust system of the internal combustion engine 1. The EGR system according to this embodiment is provided with a high pressure EGR apparatus 30 and a low pressure EGR apparatus 34.

The high pressure EGR apparatus 30 has a high pressure EGR passage 31, a high pressure EGR valve 32, and a high pressure EGR cooler 33. One end of the high pressure EGR passage 31 is connected to the exhaust manifold 5, and the other end thereof is connected to the intake manifold 4. In this embodiment, the EGR gas, which passes through the high pressure EGR passage 31 and which is introduced from the exhaust manifold 5 into the intake manifold 4, is referred to as high pressure EGR gas.

The high pressure EGR valve 32 and the high pressure EGR cooler 33 are provided for the high pressure EGR passage 31. The high pressure EGR valve 32 regulates the flow rate of the high pressure EGR gas (high pressure EGR gas amount) introduced into the intake manifold 4, by changing the cross-sectional area of the flow passage of the high pressure EGR passage 31. The high pressure EGR cooler 33 cools the high pressure EGR gas by performing the heat exchange between the high pressure EGR gas allowed to flow through the high pressure EGR passage 31 and the cooling water of the internal combustion engine 1.

The low pressure EGR apparatus 34 has a low pressure EGR passage 35, a low pressure EGR valve 36, and a low pressure EGR cooler 37. One end of the low pressure EGR passage 35 is connected to the exhaust passage 7 on the upstream side from the exhaust throttle valve 14 on the downstream side from the exhaust gas purification apparatus 11, and the other end thereof is connected to the intake passage 6 on the upstream side from the compressor 8a on the downstream side from the second throttle valve 13. In this embodiment, the EGR gas, which passes through the low pressure EGR passage 31 and which is introduced from the exhaust passage 7 into the intake passage 6, is referred to as low pressure EGR gas.

The low pressure EGR valve 36 and the low pressure EGR cooler 37 are provided for the low pressure EGR passage 35. The low pressure EGR valve 36 regulates the flow rate of the low pressure EGR gas (low pressure EGR gas amount) introduced into the intake passage 6, by changing the cross-sectional area of the flow passage of the low pressure EGR passage 35. The low pressure EGR cooler 37 cools the low pressure EGR gas by performing the heat exchange between the low pressure EGR gas allowed to flow through the low pressure EGR passage 35 and the cooling water of the internal combustion engine 1.

Further, a differential pressure sensor 18 is provided for the intake and exhaust system of the internal combustion engine 1. The differential pressure sensor 18 detects the difference between the pressure which is provided on the upstream side from the compressor 8a on the downstream side from the connecting portion of the low pressure EGR passage 35 in the intake passage 6 and the pressure which is provided on the upstream side from the low pressure EGR valve 36 in the low pressure EGR passage 35.

An electronic control unit (ECU) 20 is provided in combination with the internal combustion engine 1 constructed as described above. The air flow meter 9, the first intake temperature sensor 15, the second intake temperature sensor 16, the boost pressure sensor 17, and the differential pressure sensor 18 are electrically connected to ECU 20. Further, a cooling water temperature sensor 19, a crank position sensor 21, and an accelerator opening degree sensor 22 are electrically connected to ECU 20. The cooling water temperature sensor 19 detects the temperature of the cooling water of the internal combustion engine 1. The crank position sensor 21 outputs the pulse signal in accordance with the engine rotation speed of the internal combustion engine 1. The accelerator opening degree sensor 22 outputs the signal in accordance with the accelerator opening degree of the vehicle on which the internal combustion engine 1 is carried. The output signals of these sensors are inputted into ECU 20.

Further, the fuel injection valves 3, the first throttle valve 12, the second throttle valve 13, the high pressure EGR valve 32, and the low pressure EGR valve 36 are electrically connected to ECU 20. These components are controlled by ECU 20.

### (EGR control)

In this embodiment, the target EGR ratio, which is the target value of the EGR ratio (ratio of the entire amount of the EGR gas with respect to the intake amount of the internal combustion engine 1), is calculated on the basis of, for example, the operation state of the internal combustion engine 1. The EGR gas amount is controlled in order that the EGR ratio is controlled to the target EGR ratio.

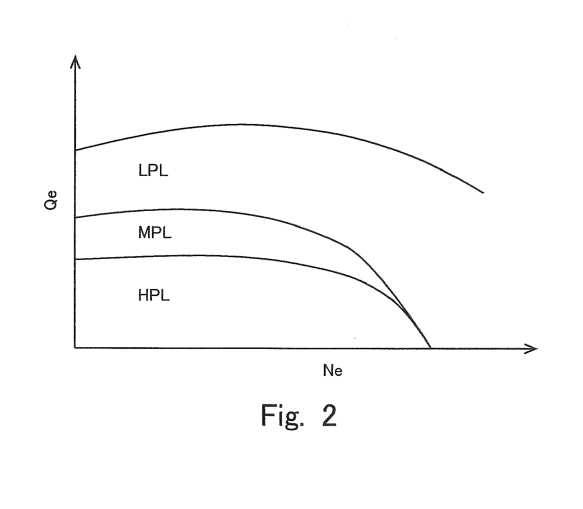

Further, in this embodiment, the mode of introduction of the EGR gas is changed on the basis of the operation state of the internal combustion engine 1. Fig. 2 shows the relationship between the operation state of the internal combustion engine 1 and the mode of introduction of the EGR gas. In Fig. 2, the vertical axis represents the engine load Qe of the internal combustion engine 1, and the horizontal axis represents the engine rotation speed Ne of the internal combustion engine 1.

In this context, the mode, in which only the high pressure EGR gas is introduced by means of the high pressure EGR apparatus 30, is referred to as "HPL mode", and the mode, in which only the low pressure EGR gas is introduced by means of the low pressure EGR apparatus 34, is referred to as "LPL mode". The mode, in which both of the high pressure EGR gas and the low pressure EGR gas are introduced, is referred to as "MPL mode".

As shown in Fig. 2, the HPL mode is selected in the low load-low rotation area, and the LPL mode is selected in the high rotation area or the high load area. The MPL mode is selected in the middle load area which exists between the area in which the HPL mode is selected and the area in which the LPL mode is selected.

The character or property, for example, the temperature differs between the high pressure EGR gas and the low pressure EGR gas. Therefore, in the MPL mode, even when the EGR ratio is identical, if the EGR gas flow rate ratio, which is the ratio between the high pressure EGR gas amount and the low pressure EGR gas amount, differs, then the exhaust characteristic of the internal combustion engine 1 is changed. In view of the above, in this embodiment, the optimum EGR gas flow rate ratio in the MPL mode is set as the target ratio while considering the exhaust characteristic of the internal combustion engine 1. The target ratio is previously determined on the basis of, for example, an experiment, as the value corresponding to, for example, the engine load of the internal combustion engine 1, the engine rotation speed, the EGR ratio, the boost pressure, and the cooling water temperature of the internal combustion engine 1.

When the EGR gas is introduced in the MPL mode, the high pressure EGR gas amount and the low pressure EGR gas amount are controlled by ECU 20 in order that the EGR gas flow rate ratio is controlled to the target ratio. In this embodiment, ECU 20, which controls the respective EGR gas amounts in order that the EGR gas flow rate ratio is controlled to the target ratio, corresponds to the control means according to the present invention.

### (Judgment of abnormal situation of EGR system)

As described above, in the EGR system according to this embodiment, the EGR ratio is controlled to the target EGR ratio, and the EGR gas flow rate ratio is controlled to the target ratio. However, when any abnormal situation (abnormality or malfunction) arises in the EGR system, even if the EGR ratio is the target EGR ratio, then a situation sometime occurs, in which the EGR gas flow rate ratio is deviated from the target ratio.

If the EGR gas flow rate ratio is greatly deviated from the target ratio, it is feared that the exhaust characteristic of the internal combustion engine 1 may be excessively deteriorated. For example, if the ratio of the high pressure EGR gas amount is excessively raised, then the discharge amount of smoke discharged from the internal combustion engine 1 is increased, and hence it is feared that the PM amount in the exhaust gas may be excessively increased. On the other hand, if the ratio of the low pressure EGR gas amount is excessively raised, the misfire tends to arise in the internal combustion engine 1. As a result, it is feared that the HC amount and the CO amount in the exhaust gas may be excessively increased.

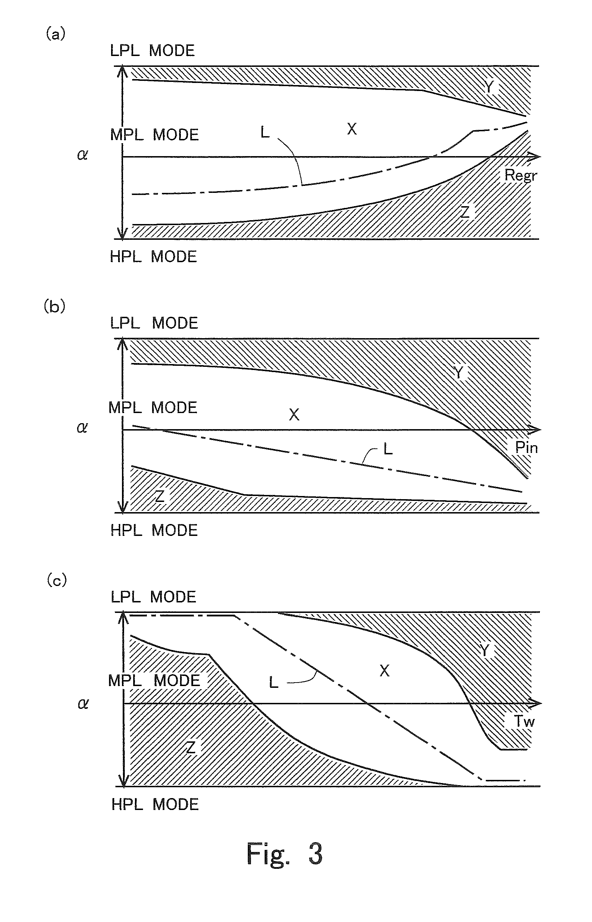

The degree of deterioration of the exhaust characteristic, which is brought about when the EGR gas flow rate ratio is deviated from the target ratio as described above, is changed depending on the EGR ratio, the boost pressure, and the cooling water temperature of the internal combustion engine 1. Fig. 3 illustrates the relationships among the values thereof, the EGR gas flow rate ratio, and the degree of deterioration of the exhaust characteristic. In Figs. 3(a), 3(b), and 3(c), the vertical axes represent the EGR gas flow rate ratio α. In Figs. 3(a), 3(b), and 3(c), the horizontal axes represent the EGR ratio Regr, the boost pressure Pin, and the cooling water temperature Tw respectively.

In Figs. 3(a), 3(b), and 3(c), alternate long and short dash lines L indicate the optimum EGR gas flow rate ratios corresponding to the respective parameters (i.e., the EGR ratio, the boost pressure, or the cooling water temperature). In other words, if the EGR gas flow rate ratio is deviated from the optimum value with respect to the value of each of the parameters, the exhaust characteristic of the internal combustion engine 1 is deteriorated. However, if the degree of deterioration of the exhaust characteristic is within a certain degree of range, the exhaust gas can be purified by the exhaust gas purification apparatus 11 to the level at which the exhaust gas can be released to the outside. In other words, the deterioration of the exhaust characteristic can be permitted provided that the deterioration is within a certain degree of range.

The area X, which is depicted in each of Figs. 3(a), 3(b), and 3(c), represents the allowable range of the EGR gas flow rate ratio with respect to the value of each of the parameters, i.e., the range in which the degree of deterioration of the exhaust characteristic of the internal combustion engine 1 falls in the allowable level. The area Y represents the area in which the ratio of the high pressure EGR gas amount is excessively high, and the area Z represents the area in which the ratio of the low pressure EGR gas amount is excessively high.

In this context, the range of the EGR gas flow rate ratio, in which the degree of deterioration of the exhaust characteristic of the internal combustion engine 1 falls in the allowable level, is designated as flow rate ratio allowable range. In this embodiment, the EGR ratio, the boost pressure, and the cooling water temperature, the EGR gas flow rate ratio, and the degree of deterioration of the exhaust characteristic are in the relationships shown in Fig. 3. Therefore, the flow rate ratio allowable range is calculated on the basis of the EGR ratio, the boost pressure, and the cooling water temperature.

Specifically, the standard value of the flow rate ratio allowable range (hereinafter referred to as standard flow rate ratio allowable range) is calculated on the basis of the EGR ratio and the boost pressure by taking the target ratio as a reference. The relationship among the standard flow rate ratio allowable range, the EGR ratio, and the boost pressure is previously stored as a map in ECU 20. Further, the correction coefficient, which is used to correct the standard flow rate ratio allowable range, is calculated on the basis of the cooling water temperature. The relationship between the correction coefficient and the cooling water temperature is also previously stored as a map in ECU 20. The flow rate ratio allowable range is calculated by correcting the standard flow rate ratio allowable range with the correction coefficient.

If the intake air temperature of the internal combustion engine 1 is changed, the optimum value and the allowable range of the EGR gas flow rate ratio are changed in the same manner as in the case in which the cooling water temperature is changed as shown in Fig. 3(c). Therefore, the correction coefficient may be calculated by using the intake air temperature in place of the cooling water temperature.

Alternatively, the flow rate ratio allowable range may be calculated by using the parameter of only any one of the EGR ratio, the boost pressure, and the cooling water temperature or the intake air temperature of the internal combustion engine 1. However, according to the calculating method in which the plurality of parameters are combined as described above, it is possible to calculate the flow rate ratio allowable range at a higher accuracy. Further alternatively, the flow rate ratio allowable range may be calculated by using the parameter of any operation condition other than the above which affects the degree of deterioration of the exhaust characteristic with respect to the EGR gas flow rate ratio.

In this embodiment, the abnormal situation of the EGR system is judged on the basis of the flow rate ratio allowable range calculated by the method as described above. In other words, the actual EGR gas flow rate ratio is estimated, and it is judged or discriminated whether or not the estimated value is deviated from the flow rate ratio allowable range. If the estimated value is deviated from the flow rate ratio allowable range, it is judged that the EGR system is in the abnormal situation. Accordingly, it is possible to detect the abnormal situation of the EGR system accompanied by the excessive deterioration of the exhaust characteristic.

The method for estimating the actual EGR gas flow rate ratio can be exemplified by such a method that at least any one of the high pressure EGR gas amount and the low pressure EGR gas amount is estimated on the basis of the differential pressure between the upstream side and the downstream side of the EGR valve or the difference in the intake temperature between the upstream side and the downstream side of the connecting portion of the EGR passage in the intake passage, and the EGR gas flow rate ratio is calculated by using the estimated value. In this embodiment, the high pressure EGR gas amount can be estimated on the basis of the intake temperature detected by the first and second intake temperature sensors 15, 16. Further, the low pressure EGR gas amount can be estimated on the basis of the differential pressure detected by the differential pressure sensor 18.

When the opening degree sensors, which detect the opening degrees of the EGR valve, the throttle valve, and the exhaust throttle valve, are installed, it is also possible to estimate the high pressure EGR gas amount and the low pressure EGR gas amount in accordance with a model expression which uses the parameters of the opening degrees and the intake air amount. If any one of the high pressure EGR gas amount and the low pressure EGR gas amount can be estimated, the EGR gas flow rate ratio can be calculated on the basis of the estimated value and the entire EGR gas amount. In the present invention, it is also allowable to adopt any other method as the method for estimating the actual EGR gas flow rate ratio.

### (Abnormal situation judgment flow)

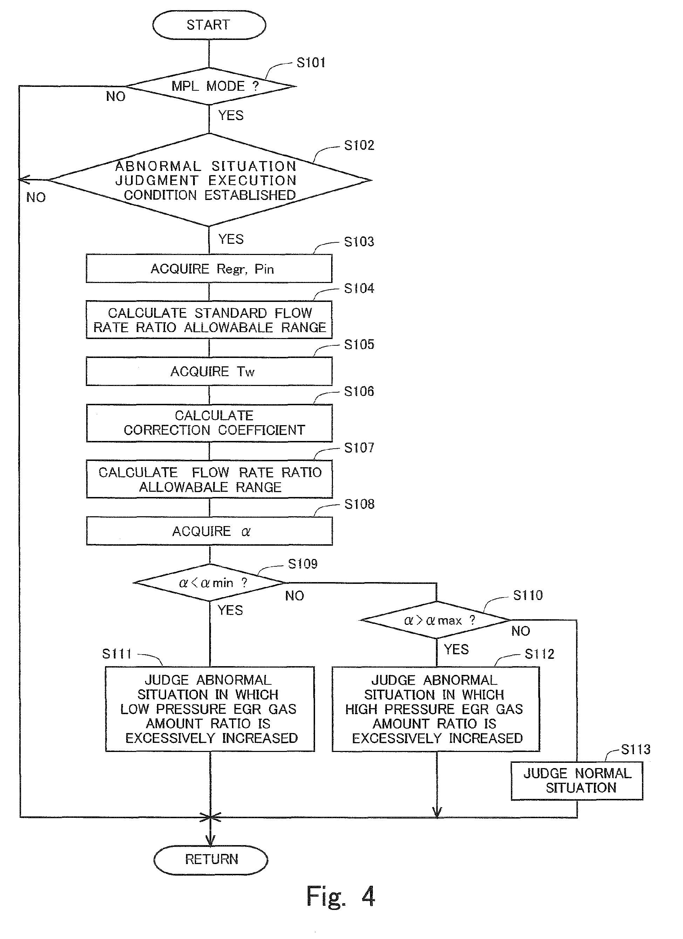

An explanation will be made below on the basis of a flow chart shown in Fig. 4 about an abnormal situation judgment flow for the EGR system according to this embodiment. This flow is previously stored in ECU 20, and this flow is repeatedly executed by ECU 20 at predetermined intervals.

In this flow, at first in Step S101, it is judged whether or not the EGR gas is introduced in the MPL mode. If it is judged in Step S101 that the EGR gas is introduced in the MPL mode, it is subsequently judged in Step S102 whether or not the execution condition of the abnormal situation judgment for the EGR system is established. The execution condition for the abnormal situation judgment for the EGR system can be exemplified, for example, by the fact that the operation state of the internal combustion engine 1 is the steady operation state and the fact that the sensors for detecting the values of various parameters for judging the abnormal situation, which include, for example, the air flow meter 9, the first intake temperature sensor 15, the second intake temperature sensor 16, the boost pressure sensor 17, the differential pressure sensor 18, and the cooling water temperature sensor 19, are normally operated.

If it is judged in Step S102 that the execution condition for the abnormal situation judgment for the EGR system is established, the EGR ratio Regr and the boost pressure Pin are subsequently acquired in Step S103. The EGR ratio Regr is calculated on the basis of, for example, the intake air amount of the internal combustion engine 1 detected by the air flow meter 9 and the operation state of the internal combustion engine 1. The boost pressure Pin is acquired by reading the detected value of the boost pressure sensor 17. Subsequently, in Step S104, the standard flow rate ratio allowable range is calculated by substituting the values of the EGR ratio Regr and the boost pressure Pin acquired in Step S103 into the map stored by ECU 20.

Subsequently, in Step S105, the cooling water temperature Tw of the internal combustion engine 1 is acquired. The cooling water temperature Tw is acquired by reading the detected value of the cooling water temperature sensor 19. Subsequently, in Step S106, the correction coefficient, which is used to correct the standard flow rate ratio allowable range, is calculated by substituting the value of the cooling water temperature Tw acquired in Step S105 into the map stored by ECU 20.

Subsequently, in Step S107, the flow rate ratio allowable range is calculated by correcting the standard flow rate ratio allowable range calculated in Step S104 with the correction coefficient calculated in Step S106. In this embodiment, ECU 20, which executes the process ranging from Step 103 to Step S107, corresponds to the allowable range calculating means according to the present invention.

Subsequently, in Step S108, the actual EGR gas flow rate ratio α at the present point in time is acquired. The EGR gas flow rate ratio α is estimated in accordance with the estimating method as described above. It is herein assumed that the EGR gas flow rate ratio α is calculated as the ratio of the high pressure EGR gas amount with respect to the low pressure EGR gas amount (i.e., α = high pressure EGR gas amount / low pressure EGR gas amount).

Subsequently, it is judged in Step S109 whether or not the EGR gas flow rate ratio α acquired in Step S108 is smaller than the lower limit value αmin of the flow rate ratio allowable range calculated in Step S107. If the affirmative judgment is made in Step S109, it is judged in Step S111 that the abnormal situation, in which the ratio of the low pressure EGR gas amount is excessively raised, arises in the EGR system.

On the other hand, if the negative judgment is made in Step S109, it is subsequently judged in Step S110 whether or not the EGR gas flow rate ratio α acquired in Step S108 is larger than the upper limit value αmax of the flow rate ratio allowable range calculated in Step S107. If the affirmative judgment is made in Step S110, it is judged in Step S112 that the abnormal situation, in which the ratio of the high pressure EGR gas amount is excessively raised, arises in the EGR system. If the negative judgment is made in Step S110, it is judged in Step S113 that the EGR system is in the normal situation.

According to the flow of the abnormal situation judgment for the EGR system as described above, it is possible to detect the abnormal situation in which the ratio of the high pressure EGR gas is excessively raised and the abnormal situation in which the ratio of the low pressure EGR gas is excessively raised respectively.

### [DESCRIPTION OF THE REFERENCE SIGNS]

- 1: interval combustion engine
- 4: intake manifold
- 5: exhaust manifold
- 6: intake passage
- 7: exhaust passage
- 8: turbo charger
- 8a: compressor
- 8b: turbine
- 9: air flow meter
- 12: first throttle valve
- 13: second throttle valve
- 14: exhaust throttle valve
- 15: first intake temperature sensor
- 16: second intake temperature sensor
- 17: oost pressure sensor
- 18: differential pressure sensor
- 19: cooling water sensor
- 20: ECU
- 30: high pressure EGR apparatus
- 31: high pressure EGR passage
- 32: high pressure EGR valve
- 34: low pressure EGR apparatus
- 35: low pressure EGR passage
- 36: low pressure EGR valve

## Claims

1. An abnormality detecting apparatus for an EGR system of an internal combustion engine (1) including a turbo charger (8) having a turbine (8b) which is provided for an exhaust passage (7) and a compressor (8a) which is provided for an intake passage(6), the EGR system of the internal combustion engine (1) comprising:
a high pressure EGR apparatus (30) which has a high pressure EGR passage (31) for connecting the exhaust passage (7) upstream of the turbine (8b) and the intake passage (6) downstream of the compressor (8a), and a high pressure EGR valve (32) for regulating a flow rate of a high pressure EGR gas introduced into the intake passage (6) via the high pressure EGR passage (31);
a low pressure EGR apparatus (34) which has a low pressure EGR passage (35) for connecting the exhaust passage (7) downstream of the turbine (8b) and the intake passage (6) upstream of the compressor (8a), and a low pressure EGR valve (36) for regulating a flow rate of a low pressure EGR gas introduced into the intake passage (6) via the low pressure EGR passage (35); and
control means (20) which controls an EGR gas flow rate ratio (α) as a ratio between the flow rate of the high pressure EGR gas introduced into the intake passage (6) and the flow rate of the low pressure EGR gas introduced into the intake passage (6) so that the EGR gas flow rate ratio arrives at a prescribed target ratio,
**characterized in that** the abnormality detecting apparatus for the EGR system comprises:
estimating means which estimates the actual EGR gas flow rate ratio (α);
allowable range calculating means which calculates a flow rate ratio allowable range (X) as such a range of the EGR gas flow rate ratio (α) that a degree of deterioration of an exhaust characteristic of the internal combustion engine falls in an allowable level on the basis of an EGR ratio (Regr) as a ratio of an entire amount of the EGR gas with respect to an intake amount of the internal combustion engine (1) by taking the target ratio as a reference; and
judging means which judges that the EGR system is in an abnormality if the EGR gas flow rate ratio (α) estimated by the estimating means is deviated from the flow rate ratio allowable range (X) calculated by the allowable range calculating means.

2. The abnormality detecting apparatus for the EGR system according to claim 1, wherein the allowable range calculating means calculates the flow rate ratio allowable range (X) on the basis of at least any one of a boost pressure (Pin), and a cooling water temperature (Tw) or an intake air temperature of the internal combustion engine (1), in addition to the EGR ratio (Regr).

3. The abnormality detecting apparatus for the EGR system according to claim 2, wherein the allowable range calculating means has a map which represents a relationship between the EGR ratio (Regr), the boost pressure (Pin), or the cooling water temperature (Tw) or the intake air temperature of the internal combustion engine (1) and the flow rate ratio allowable range (X), and the flow rate ratio allowable range (X) is calculated on the basis of the map.

4. The abnormality detecting apparatus for the EGR system according to claim 2 or 3, wherein the allowable range calculating means calculates a standard flow rate ratio allowable range as a standard value of the flow rate ratio allowable range (X) on the basis of the EGR ratio (Regr) and the boost pressure (Pin), the allowable range calculating means calculates a correction coefficient on the basis of the cooling water temperature (Tw) or the intake air temperature of the internal combustion engine (1), and the allowable range calculating means calculates the flow rate ratio allowable range (X) by correcting the standard flow rate ratio allowable range with the correction coefficient.

5. An abnormality detecting method for an EGR system of an internal combustion engine (1) including a turbo charger (8) having a turbine (8b) which is provided for an exhaust passage (7) and a compressor (8a) which is provided for an intake passage (6), the EGR system of the internal combustion engine (1) comprising:
a high pressure EGR apparatus (30) which has a high pressure EGR passage (31) for connecting the exhaust passage (7) upstream of the turbine (8b) and the intake passage (6) downstream of the compressor (8a), and a high pressure EGR valve (32) for regulating a flow rate of a high pressure EGR gas introduced into the intake passage (6) via the high pressure EGR passage (31);
a low pressure EGR apparatus (34) which has a low pressure EGR passage (35) for connecting the exhaust passage (7) downstream of the turbine (8b) and the intake passage (6) upstream of the compressor (8a), and a low pressure EGR valve (36) for regulating a flow rate of a low pressure EGR gas introduced into the intake passage (6) via the low pressure EGR passage (35); and
control means which controls an EGR gas flow rate ratio (α) as a ratio between the flow rate of the high pressure EGR gas introduced into the intake passage (6) and the flow rate of the low pressure EGR gas introduced into the intake passage (6) so that the EGR gas flow rate ratio (α) arrives at a prescribed target ratio,
**characterized in that** the abnormality detecting method for the EGR system comprises:
an estimating step of estimating the actual EGR gas flow rate ratio (α);
an allowable range calculating step of calculating a flow rate ratio allowable range as such a range of the EGR gas flow rate ratio (α) that a degree of deterioration of an exhaust characteristic of the internal combustion engine (1) falls in an allowable level on the basis of an EGR ratio (Regr) as a ratio of an entire amount of the EGR gas with respect to an intake amount of the internal combustion engine (1) by taking the target ratio as a reference; and
a judging step of judging that the EGR system is in an abnormality if the EGR gas flow rate ratio (Regr) estimated in the estimating step is deviated from the flow rate ratio allowable range calculated in the allowable range calculating step.

## Patentansprüche

1. Eine Abnormalitätserfassungsvorrichtung für ein EGR-System eines Motors (1) mit interner Verbrennung beinhaltend einen Turbolader (8) aufweisend eine Turbine (8b), welche für eine Ausstoßpassage (7) vorgesehen ist, und einen Kompressor (8a), welcher für eine Ansaugpassage (6) vorgesehen ist, wobei das EGR-System des Motors (1) mit interner Verbrennung aufweist:
eine Hochdruck-EGR-Vorrichtung (30), welche eine Hochdruck-EGR-Passage (31) zum Verbinden der Ausstoßpassage (7) stromaufwärts der Turbine (8b) und der Ansaugpassage (6) stromabwärts des Kompressors (8a) und ein Hochdruck-EGR-Ventil (32) zum Regulieren einer Strömungsrate eines in die Ansaugpassage (6) über die Hochdruck-EGR-Passage (31) eingeleiteten Hochdruck-EGR-Gases aufweist,
eine Niederdruck-EGR-Vorrichtung (34), welche eine Niederdruck-EGR-Passage (35) zum Verbinden der Ausstoßpassage (7) stromabwärts der Turbine (8b) und der Ansaugpassage (6) stromaufwärts des Kompressors (8a) und ein Niederdruck-EGR-Ventil (36) zum Regulieren einer Strömungsrate eines in die Ansaugpassage (6) über die Niederdruck-EGR-Passage (35) eingeleiteten Niederdruck-EGR-Gases aufweist, und
ein Steuerungsmittel (20), welches ein EGR-Gasströmungsratenverhältnis (α) als ein Verhältnis zwischen der Strömungsrate des in die Ansaugpassage (6) eingeleiteten Hochdruck-EGR-Gases und der Strömungsrate des in die Ansaugpassage (6) eingeleiteten Niederdruck-EGR-Gases steuert, so dass das EGR-Gasströmungsratenverhältnis ein vorgeschriebenes Sollverhältnis erreicht,
**dadurch gekennzeichnet, dass** die Abnormalitätserfassungsvorrichtung für das EGR-System aufweist:
ein Schätzmittel, welches das tatsächliche EGR-Gasströmungsratenverhältnis (α) schätzt,
ein Berechnungsmittel für einen erlaubbaren Bereich, welches auf der Basis eines EGR-Verhältnisses (Regr) als einem Verhältnis eines Gesamtbetrages des EGR-Gases bezogen auf einen Ansaugbetrag des Motors (1) mit interner Verbrennung einen erlaubbaren Bereich (X) eines Strömungsratenverhältnisses als einen solchen Bereich des EGR-Gasströmungsratenverhältnisses (α) berechnet, dass ein Grad einer Verschlechterung einer Ausstoßcharakteristik des Motors mit interner Verbrennung in ein erlaubbares Level fällt, indem das Sollverhältnis als eine Referenz genommen wird, und
ein Beurteilungsmittel, welches beurteilt, dass sich das EGR-System in einer Abnormalität befindet, falls das durch das Schätzungsmittel geschätzte EGR-Gasströmungsratenverhältnis (α) von dem durch das Berechnungsmittel für den erlaubbaren Bereich berechneten erlaubbaren Bereich (X) des Strömungsratenverhältnisses abgewichen ist.

2. Die Abnormalitätserfassungsvorrichtung für das EGR-System gemäß dem Anspruch 1, wobei das Berechnungsmittel für den erlaubbaren Bereich den erlaubbaren Bereich (X) des Strömungsratenverhältnisses auf der Basis von zumindest einem der Werte Ladedruck (Pin) und Kühlwassertemperatur (Tw) oder Ansauglufttemperatur des Motors (1) mit interner Verbrennung zusätzlich zu dem EGR-Verhältnis (Regr) berechnet.

3. Die Abnormalitätserfassungsvorrichtung für das EGR-System gemäß dem Anspruch 2, wobei das Berechnungsmittel für den erlaubbaren Bereich ein Kennfeld aufweist, welches eine Beziehung zwischen dem EGR-Verhältnis (Regr), dem Ladedruck (Pin) oder der Kühlwassertemperatur (tw) oder der Ansauglufttemperatur des Motors (1) mit interner Verbrennung und dem erlaubbaren Bereich (X) des Strömungsratenverhältnisses repräsentiert, und der erlaubbare Bereich (X) des Strömungsratenverhältnisses auf der Basis des Kennfelds berechnet wird.

4. Die Abnormalitätserfassungsvorrichtung für das EGR-System gemäß dem Anspruch 2 oder 3, wobei das Berechnungsmittel für den erlaubbaren Bereich einen erlaubbaren Standardbereich des Strömungsratenverhältnisses als einen Standardwert des erlaubbaren Bereichs (X) des Strömungsratenverhältnisses auf der Basis des EGR-Verhältnisses (Regr) und des Ladedrucks (Pin) berechnet, das Berechnungsmittel für den erlaubbaren Bereich einen Korrekturkoeffizienten auf der Basis der Kühlwassertemperatur (Tw) oder der Ansaugtemperatur des Motors (1) mit interner Verbrennung berechnet, und das Berechnungsmittel für den erlaubbaren Bereich den erlaubbaren Bereich (X) des Strömungsratenverhältnisses berechnet, indem der erlaubbare Standardbereich des Strömungsratenverhältnisses mit dem Korrekturkoeffizienten korrigiert wird.

5. Ein Abnormalitätserfassungsverfahren für ein EGR-System eines Motors (1) mit interner Verbrennung beinhaltend einen Turbolader (8) aufweisend eine Turbine (8b), welche für eine Ausstoßpassage (7) vorgesehen ist, und einen Kompressor (8a), welcher für eine Ansaugpassage (6) vorgesehen ist, wobei das EGR-System des Motors (1) mit interner Verbrennung aufweist:
eine Hochdruck-EGR-Vorrichtung (30), welche eine Hochdruck-EGR-Passage (31) zum Verbinden der Ausstoßpassage (7) stromaufwärts der Turbine (8b) und der Ansaugpassage (6) stromabwärts des Kompressors (8a) und ein Hochdruck-EGR-Ventil (32) zum Regulieren einer Strömungsrate eines in die Ansaugpassage (6) über die Hochdruck-EGR-Passage (31) eingeleiteten Hochdruck-EGR-Gases aufweist,
eine Niederdruck-EGR-Vorrichtung (34), welche eine Niederdruck-EGR-Passage (35) zum Verbinden der Ausstoßpassage (7) stromabwärts der Turbine (8b) und der Ansaugpassage (6) stromaufwärts des Kompressors (8a) und ein Niederdruck-EGR-Ventil (36) zum Regulieren einer Strömungsrate eines in die Ansaugpassage (6) über die Niederdruck-EGR-Passage (35) eingeleiteten Niederdruck-EGR-Gases aufweist, und
ein Steuerungsmittel (20), welches ein EGR-Gasströmungsratenverhältnis (α) als ein Verhältnis zwischen der Strömungsrate des in die Ansaugpassage (6) eingeleiteten Hochdruck-EGR-Gases und der Strömungsrate des in die Ansaugpassage (6) eingeleiteten Niederdruck-EGR-Gases steuert, so dass das EGR-Gasströmungsratenverhältnis (α) ein vorgeschriebenes Sollverhältnis erreicht,
**dadurch gekennzeichnet, dass** das Abnormalitätserfassungsverfahren für das EGR-System aufweist:
einen Schätzschritt eines Schätzens des tatsächlichen EGR-Gasströmungsratenverhältnisses (α),
einen Berechnungsschritt für einen erlaubbaren Bereich eines Berechnens eines erlaubbaren Bereichs eines Strömungsratenverhältnisses als einen solchen Bereich des EGR-Gasströmungsratenverhältnisses (α), dass ein Grad einer Verschlechterung einer Ausstoßcharakteristik des Motors (1) mit interner Verbrennung in ein erlaubbares Level fällt, auf der Basis eines EGR-Verhältnisses (Regr) als einem Verhältnis eines Gesamtbetrages des EGR-Gases bezogen auf einen Ansaugbetrag des Motors (1) mit interner Verbrennung, indem das Sollverhältnis als eine Referenz genommen wird, und
einen Beurteilungsschritt eines Beurteilens, dass sich das EGR-System in einer Abnormalität befindet, falls das in dem Schätzungsschritt geschätzte EGR-Gasströmungsratenverhältnis (Regr) von dem in dem Berechnungsschritt für den erlaubbaren Bereich berechneten erlaubbaren Bereich des Strömungsratenverhältnisses abgewichen ist.

## Revendications

1. Appareil de détection d'anomalie pour un système de recirculation des gaz d'échappement d'un moteur à combustion interne (1) comprenant un turbocompresseur (8) comportant une turbine (8b) qui est prévue pour un passage d'échappement (7) et un compresseur (8a) qui est prévu pour un passage d'admission (6), le système de recirculation des gaz d'échappement du moteur à combustion interne (1) comprenant :
un appareil de recirculation des gaz d'échappement à haute pression (30) qui comporte un passage de recirculation des gaz d'échappement à haute pression (31) pour relier le passage d'échappement (7) en amont de la turbine (8b) et le passage d'admission (6) en aval du compresseur (8a), et une soupape de recirculation des gaz d'échappement à haute pression (32) pour réguler un débit d'un gaz de recirculation des gaz d'échappement à haute pression introduit dans le passage d'admission (6) par l'intermédiaire du passage de recirculation des gaz d'échappement à haute pression (31) ;
un appareil de recirculation des gaz d'échappement à basse pression (34) qui comporte un passage de recirculation des gaz d'échappement à basse pression (35) pour relier le passage d'échappement (7) en aval de la turbine (8b) et le passage d'admission (6) en amont du compresseur (8a), et une soupape de recirculation des gaz d'échappement à basse pression (36) pour réguler un débit d'un gaz de recirculation des gaz d'échappement à basse pression introduit dans le passage d'admission (6) par l'intermédiaire du passage de recirculation des gaz d'échappement à basse pression (35) ; et
des moyens de commande (20) qui commandent un rapport de débit de gaz de recirculation des gaz d'échappement (α) en tant que rapport entre le débit du gaz de recirculation des gaz d'échappement à haute pression introduit dans le passage d'admission (6) et le débit du gaz de recirculation des gaz d'échappement à basse pression introduit dans le passage d'admission (6) de sorte que le rapport de débit de gaz de recirculation des gaz d'échappement atteigne un rapport cible prescrit,
**caractérisé en ce que** l'appareil de détection d'anomalie pour le système de recirculation des gaz d'échappement comprend :
des moyens d'estimation qui estiment le rapport de débit de gaz de recirculation des gaz d'échappement (α) réel ;
des moyens de calcul de plage admissible qui calculent une plage admissible de rapport de débit (X) en tant que plage du rapport de débit de gaz de recirculation des gaz d'échappement (α) telle qu'un degré de détérioration d'une caractéristique d'échappement du moteur à combustion interne tombe dans un niveau admissible sur la base d'un rapport de recirculation des gaz d'échappement (Regr) en tant que rapport entre une quantité entière du gaz de recirculation des gaz d'échappement et une quantité d'admission du moteur à combustion interne (1) en prenant le rapport cible en tant que référence ; et
des moyens de jugement qui jugent que le système de recirculation des gaz d'échappement est dans une condition anormale si le rapport de débit de gaz de recirculation des gaz d'échappement (α) estimé par les moyens d'estimation s'écarte de la plage admissible de rapport de débit (X) calculée par les moyens de calcul de plage admissible.

2. Appareil de détection d'anomalie pour le système de recirculation des gaz d'échappement selon la revendication 1, dans lequel les moyens de calcul de plage admissible calculent la plage admissible de rapport de débit (X) sur la base d'au moins l'une quelconque d'une pression de suralimentation (Pin) et d'une température d'eau de refroidissement (Tw) ou d'une température d'air d'admission du moteur à combustion interne (1), en plus du rapport de recirculation des gaz d'échappement (Regr).

3. Appareil de détection d'anomalie pour le système de recirculation des gaz d'échappement selon la revendication 2, dans lequel les moyens de calcul de plage admissible comportent une carte qui représente une relation entre le rapport de recirculation des gaz d'échappement (Regr), la pression de suralimentation (Pin), ou la température d'eau de refroidissement (Tw) ou la température d'air d'admission du moteur à combustion interne (1) et la plage admissible de rapport de débit (X), et la plage admissible de rapport de débit (X) est calculée sur la base de la carte.

4. Appareil de détection d'anomalie pour le système de recirculation des gaz d'échappement selon la revendication 2 ou 3, dans lequel les moyens de calcul de plage admissible calculent une plage admissible de rapport de débit standard en tant que valeur standard de la plage admissible de rapport de débit (X) sur la base du rapport de recirculation des gaz d'échappement (Regr) et de la pression de suralimentation (Pin), les moyens de calcul de plage admissible calculent un coefficient de correction sur la base de la température d'eau de refroidissement (Tw) ou de la température d'air d'admission du moteur à combustion interne (1), et les moyens de calcul de plage admissible calculent la plage admissible de rapport de débit (X) en corrigeant la plage admissible de rapport de débit standard avec le coefficient de correction.

5. Procédé de détection d'anomalie pour un système de recirculation des gaz d'échappement d'un moteur à combustion interne (1) comprenant un turbocompresseur (8) comportant une turbine (8b) qui est prévue pour un passage d'échappement (7) et un compresseur (8a) qui est prévu pour un passage d'admission (6), le système de recirculation des gaz d'échappement du moteur à combustion interne (1) comprenant :
un appareil de recirculation des gaz d'échappement à haute pression (30) qui comporte un passage de recirculation des gaz d'échappement à haute pression (31) pour relier le passage d'échappement (7) en amont de la turbine (8b) et le passage d'admission (6) en aval du compresseur (8a), et une soupape de recirculation des gaz d'échappement à haute pression (32) pour réguler un débit d'un gaz de recirculation des gaz d'échappement à haute pression introduit dans le passage d'admission (6) par l'intermédiaire du passage de recirculation des gaz d'échappement à haute pression (31) ;
un appareil de recirculation des gaz d'échappement à basse pression (34) qui comporte un passage de recirculation des gaz d'échappement à basse pression (35) pour relier le passage d'échappement (7) en aval de la turbine (8b) et le passage d'admission (6) en amont du compresseur (8a), et une soupape de recirculation des gaz d'échappement à basse pression (36) pour réguler un débit d'un gaz de recirculation des gaz d'échappement à basse pression introduit dans le passage d'admission (6) par l'intermédiaire du passage de recirculation des gaz d'échappement à basse pression (35) ; et
des moyens de commande qui commandent un rapport de débit de gaz de recirculation des gaz d'échappement (α) en tant que rapport entre le débit du gaz de recirculation des gaz d'échappement à haute pression introduit dans le passage d'admission (6) et le débit du gaz de recirculation des gaz d'échappement à basse pression introduit dans le passage d'admission (6) de sorte que le rapport de débit de gaz de recirculation des gaz d'échappement (α) atteigne un rapport cible prescrit,
**caractérisé en ce que** le procédé de détection d'anomalie pour le système de recirculation des gaz d'échappement comprend :
une étape d'estimation pour estimer le rapport de débit de gaz de recirculation des gaz d'échappement (α) réel ;
une étape de calcul de plage admissible pour calculer une plage admissible de rapport de débit en tant que plage du rapport de débit de gaz de recirculation des gaz d'échappement (α) telle qu'un degré de détérioration d'une caractéristique d'échappement du moteur à combustion interne (1) tombe dans un niveau admissible sur la base d'un rapport de recirculation des gaz d'échappement (Regr) en tant que rapport entre une quantité entière du gaz de recirculation des gaz d'échappement et une quantité d'admission du moteur à combustion interne (1) en prenant le rapport cible en tant que référence ; et
une étape de jugement pour juger que le système de recirculation des gaz d'échappement est dans une condition anormale si le rapport de débit de gaz de recirculation des gaz d'échappement (Regr) estimé à l'étape d'estimation s'écarte de la plage admissible de rapport de débit calculée par les moyens de calcul de plage admissible.
